Europäisches Patentamt

(19) European Patent Office

Office européen des brevets

(11) **EP 0 952 957 B1**

(12) **FASCICULE DE BREVET EUROPEEN**

(45) Date de publication et mention
de la délivrance du brevet:
**24.11.2004 Bulletin 2004/48**

(51) Int Cl.⁷: **C01B 3/34**, H05H 1/24

(21) Numéro de dépôt: **97952989.8**

(86) Numéro de dépôt international:
**PCT/FR1997/002396**

(22) Date de dépôt: **23.12.1997**

(87) Numéro de publication internationale:
**WO 1998/028223 (02.07.1998 Gazette 1998/26)**

(54) **PROCEDE ET APPAREILS DE PRODUCTION D'HYDROGENE PAR REFORMAGE A PLASMA**

VERFAHREN UND VORRICHTUNGEN ZUR HERSTELLUNG VON WASSERSTOFF DURCH
PLASMAREFORMING

METHOD AND DEVICES FOR PRODUCING HYDROGEN BY PLASMA REFORMER

(84) Etats contractants désignés:
**AT BE CH DE DK ES FI FR GB GR IE IT LI LU MC
NL PT SE**
Etats d'extension désignés:
**AL LT LV MK RO SI**

(30) Priorité: **24.12.1996 FR 9615944**

(43) Date de publication de la demande:
**03.11.1999 Bulletin 1999/44**

(73) Titulaire: **Advanced Hydrogen Technologies Inc.
Montréal Province du Québec H3A3C1 (CA)**

(72) Inventeurs:
 • **ETIEVANT, Claude
 F-78000 Versailles (FR)**
 • **ROSHD, Mustapha
 F-78860 Saint Nom La Bretèche (FR)**

(74) Mandataire: **Le Forestier, Eric
Cabinet Régimbeau
20, rue de Chazelles
75847 Paris cedex 17 (FR)**

(56) Documents cités:
 **WO-A-92/02448         FR-A- 2 724 806
 US-A- 4 981 676**

 • **TANAKA ET AL: "A stoichiometric conversion of
 CO + CH4 into CO + 2 H2 by microwave
 discharge" JOURNAL OF THE CHEMICAL
 SOCIETY, CHEMICAL COMMUNICATIONS, 1982,
 pages 921-922, XP002040589**

 • **LESUEUR H ET AL: "ELECTRICALLY ASSISTED
 PARTIAL OXIDATION OF METHANE"
 INTERNATIONAL JOURNAL OF HYDROGEN
 ENERGY, vol. 19, no. 2, 1 février 1994, pages
 139-144, XP000417226**
 • **O'BRIEN ET AL: "Hydrogen production via
 plasma reformers" PROCEEDINGS OF THE 31ST
 INTERSOCIETY ENERGY CONVERSION
 ENGINEERING CONFERENCE, 11-16 AUGUST
 1996, vol. 3, 1996, pages 1747-1752,
 XP002040590**
 • **KERKER: "Herstellung von Reduktionsgas oder
 Synthesegas mit Lichtbogenplasmaverfahren"
 ELECTROWÄRME INTERNATIONAL, vol. 45B
 (3-4), 1987, pages B155-B161, XP002040591**
 • **SHIGEYUKI UEMIYA ET AL: "HYDROGEN
 PERMEABLE PALLADIUM-SILVER ALLOY
 MEMBRANE SUPPORTED ON POROUS
 CERAMICS" JOURNAL OF MEMBRANE
 SCIENCE, vol. 56, no. 3, 1 mars 1991, pages
 315-325, XP000176959**
 • **XOMERITAKIS ET AL: "Fabrication of a thin
 palladium membrane supported in a porous
 ceramic substrate by chemical vapour
 deposition" JOURNAL OF MEMBRANE
 SCIENCE, vol. 120, 1996, pages 261-272,
 XP002040592**
 • **LIVSHITS ET AL: "Physico-chemical origin of
 superpermeability" JOURNAL OF NUCLEAR
 MATERIALS, vol. 170, 1990, pages 79-94,
 XP002040593 cité dans la demande**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

L'invention se rapporte à un procédé et à des appareils de production d'hydrogène par une opération de réformage à plasma.

Pour ce qui est de ces appareils, l'invention concerne des générateurs d'hydrogène, aisément transportables et relativement peu onéreux, adaptés à produire de l'hydrogène sensiblement pur pour tous usages. Le principal usage de ces générateurs sera d'alimenter des piles à combustible, installées sur des voitures électriques ou incorporées à des groupes électrogènes.

Pour ce qui est du procédé, l'invention concerne la production d'un courant gazeux contenant de l'hydrogène, destiné à alimenter une pile à combustible opérant à basse température, à partir d'un mélange gazeux primaire formé d'un gaz combustible et de vapeur d'eau et/ou d'oxygène ou d'air.

Les générateurs d'hydrogène, des types concernés par l'invention, comportent une chambre de réaction, constamment maintenue à une température relativement élevée, favorable au réformage d'un mélange gazeux primaire, placé dans un état réactionnel. Un tel mélange primaire est constitué par un gaz combustible (hydrocarbure, alcool, monoxyde de carbone...), de l'oxygène et/ou de la vapeur d'eau. Dans la chambre de réaction, ce mélange primaire subit des réformages plus ou moins complets, endothermiques ou exothermiques, selon les équations chimiques (1) à (4) ci-après, qui décrivent le réformage d'un mélange stochiométrique de méthane, d'oxygène et de vapeur d'eau.

$$CH_4 + 2\,H_2O \dashrightarrow CO_2 + 4\,H_2 \quad (1) \rightarrow \text{réaction fortement endothermique}$$

$$CH_4 + H_2O \dashrightarrow CO + 3\,H_2 \quad (2) \rightarrow \text{réaction endothermique modérée}$$

$$CO + H_2O \dashrightarrow CO_2 + H_2 \quad (3) \rightarrow \text{réaction exothermique modérée}$$

$$CH_4 + O_2 \dashrightarrow CO_2 + 2\,H_2 \quad (4) \rightarrow \text{réaction fortement exothermique}$$

Dans le cas du réformage d'un mélange gazeux primaire contenant un autre hydrocarbure ou un alcool, des équations analogues peuvent être écrites.

De tels réformages convertissent le mélange gazeux primaire réalisé en un mélange gazeux secondaire formé d'hydrogène et de dioxyde de carbone ainsi que, généralement, de monoxyde de carbone et d'un reliquat de mélange primaire non converti.

Les équations (2) et (3) ci-dessus décrivent les étapes intermédiaires par lesquelles passe généralement le réformage décrit par l'équation (1).

Du monoxyde de carbone est donc en général produit au cours de toute opération de réformage d'un hydrocarbure ou d'un alcool. Le monoxyde de carbone est connu pour être un poison pour un type de piles à combustible particulièrement intéressant, fonctionnant à basse température et comportant un électrolyte polymère solide (piles PEM, Proton Exchange Membrane en anglais). En conséquence, un traitement complémentaire du mélange secondaire réalisé est indispensable pour éliminer le monoxyde de carbone, si l'on veut pouvoir directement utiliser l'hydrogène obtenu dans de telles piles à combustible.

Parmi les chambres de réaction des réformeurs connus, on distingue celles qui font appel à des catalyseurs chimiques et celles qui utilisent un plasma chaud pour constituer un milieu réactionnel. Les documents commentés ci-après décrivent trois types de chambres de réaction.

Le brevet américain N° 4.981.676, accordé en 1991 à Minet et al, décrit un procédé pour réaliser le réformage d'un mélange gazeux primaire de méthane et de vapeur d'eau. Ce réformage est réalisé dans une chambre de réaction à section annulaire, de grande longueur et de petit diamètre, contenant un matériau catalyseur, constitué par un empilement de granulés enrobés de nickel. La paroi extérieure de la chambre de réaction est une gaine métallique et sa paroi intérieure, une membrane présentant une perméabilité relativement sélective pour l'hydrogène, constituée par une céramique poreuse, formée de plusieurs couches d'épaisseurs et de porosités décroissantes, depuis l'intérieur vers l'extérieur, et pourvue à l'extérieur d'une couche métallique mince à effet catalytique. Cette membrane constitue la paroi d'une chambre de collecte de l'hydrogène produit. La chambre de réaction est chauffée de l'extérieur par des brûleurs à gaz.

Les avantages de ce procédé sont de réaliser in situ une extraction sélective de l'hydrogène naissant produit. Ce résultat a pour conséquence de déplacer le point d'équilibre thermodynamique des conversions selon les équations (1), (2) et (3), dans le sens d'une réaction plus complète et d'augmenter ainsi le taux du réformage réalisé, c'est-à-dire le taux de la conversion du méthane en hydrogène. Les désavantages de ce procédé sont nombreux qui comprennent notamment: (1) une application limitée au vaporéformage, (2) un vieillissement et une dégradation relativement rapides des catalyseurs qui imposent leur remplacement périodique, (3) une production d'un mélange gazeux formé de $CO_2$, CO et $H_2$. En conséquence, un tel procédé doit comporter au moins une étape complémentaire pour produire soit de l'hydrogène sensiblement pur soit un mélange gazeux, contenant de l'hydrogène, acceptable par une pile à combustible opérant à basse tempéraure.

Un résultat sensiblement identique, obtenu en laboratoire, est décrit dans un article de E.Kikuchi, publié par les Editions ELSEVIER, dans Catalysis Today 25 (1995), pages 333-337. Dans cet article, le réacteur comporte à nouveau une gaine enfermant un espace annulaire contenant un matériau catalyseur usuel et une membrane d'extraction sélective de l'hydrogène. Cette membrane est un composite formé par une couche mince (5 à 13 microns), en palladium ou en alliage palladium-argent, déposée sur un support creux en céramique poreuse. On notera que dans ce cas, les conversions décrites par les équations (1), (2) et (3) ci-dessus se réalisent complètement, lorsque la pression est de 9 bars et la température de 500°C. Cela, du fait de l'extraction de l'hydrogène naissant produit, qui a pour effet d'entraîner un déplacement de l'équilibre thermodynamique dans le sens d'une conversion plus complète. Quant aux désavantages de ce procédé, ils sont semblables à ceux du brevet Minet.

La demande de brevet européen publiée sous le N° 0 600 621 A1, déposée par ROLLS-ROYCE en 1993, décrit un équipement de réformage d'un mélange primaire de méthane et de vapeur d'eau qui comporte des moyens de traitement complémentaire du monoxyde de carbone contenu dans le mélange secondaire produit. Cet équipement comporte une chambre de réaction contenant une masse importante de matériau catalyseur, adapté à assurer des conversions endothermiques selon les équations (1) et (2). Pour ce faire, la température dans la chambre de réaction est portée à un niveau relativement élevé par un apport interne de chaleur, engendrée par une oxydation partielle du méthane, selon la réaction exothermique décrite par l'équation (4). Des réacteurs contenant un matériau catalyseur particulier assurent une conversion complémentaire légèrement exothermique du monoxyde de carbone en dioxyde de carbone, à température relativement basse, selon l'équation (3). Ce type d'équipement, lourd et encombrant, convient pour des installations industrielles fixes mais en aucun cas pour des générateurs d'hydrogène transportables.

Le Brevet WO-A-92/02448 décrit un appareil et procédé de production d'hydrogène par plasma.

Des procédés de production d'hydrogène, comportant des opérations de réformage à plasma chaud d'un mélange d'hydrocarbure et de vapeur d'eau, sont décrits dans deux autres documents: (1) la demande de brevet français enregistrée sous le N° 94.11209, déposée par la société Pompes Manu Entreprise et al (appelée PME ci-après) et publiée avec le numéro FR-A-2 724 806, et (2) un article de O'Brien et al du MIT, publié en août 1996 dans un document IEEE.

La chambre de réaction PME utilise un plasma chaud produit par des arcs électriques périodiques glissant entre deux électrodes à écartement croissant. Ces électrodes sont à la fois alimentées par une haute tension permanente et balayées par un courant continu relativement fort de gaz à réformer. Ces arcs électriques glissants ont une double fonction, à savoir: ioniser les tranches de gaz traversant l'espace inter-électrodes et les chauffer pour les amener à un état d'équilibre thermique de niveau élevé (4.000 à 10.000 K). Les électrons à haute énergie ainsi créés ont pour effet de stimuler la réactivité chimique des gaz concernés. Au sortir de l'espace inter-électrodes, ces gaz très chauds à haute réactivité chimique se diluent dans le reste du volume de la chambre de réaction, abaissant ainsi leur réactivité et leur température moyennes. La valeur finale de cette température est en outre diminuée par le fait que cette chambre est disposée dans une enveloppe creuse traversée par le mélange gazeux primaire à préchauffer avant son injection dans la chambre. De l'hydrogène et du monoxyde de carbone sont ainsi produits ensemble. On notera que le fonctionnement de la chambre de réaction PME utilise une très grande quantité d'électricité pour produire de l'hydrogène. Ce qui rend cette chambre totalement impropre à la réalisation d'ensembles, transportables ou non, de production d'électricité essentiellement destinée à des usages externes. Cela d'autant plus que l'installation dans une chambre PME d'une membrane connue, sélectivement perméable à l'hydrogène, ne parait pas évidente pour un homme du métier.

La chambre de réaction O'Brien utilise une torche à plasma produisant un arc électrique permanent, tournant entre deux électrodes coaxiales, alimentées par une source de tension élevée. Les fonctions et les inconvénients de l'arc électrique de la chambre de réaction PME se retrouvent à peu près dans la chambre O'Brien. De ce fait, cette chambre se révèle également impropre à la réalisation d'un générateur d'hydrogène sensiblement pur.

Le premier objet de l'invention est de développer un procédé et de construire un appareil de production d'hydrogène à haute pureté, directement utilisable dans une pile à combustible à basse température, du type PEM.

Le deuxième objet de l'invention est de réaliser des générateurs d'hydrogène transportables, à haut rendement, notamment consommant peu d'électricité, adaptés à être installés sur des voitures électriques ou être incorporés à des groupes électrogènes de petite et de moyenne puissances.

Le troisième objet de l'invention est de développer un procédé et de construire des appareils de production d'hydrogène, utilisant peu de matériaux catalyseurs.

Selon l'invention, un procédé de production d'un courant gazeux, destiné à alimenter une pile à combustible opérant à basse température, à partir d'un mélange gazeux primaire formé d'un gaz combustible et de vapeur d'eau et/ou d'oxygène et/ou d'air, contient toutes les caractéristiques techniques définies dans le libellé de la revendication indépendante 16. D'autres caractéristiques optionelles sont décrites dans les revendications dépendantes 17 et 18.

Grâce à ce procédé, il est possible de produire à des conditions économiques intéressantes, de l'hydrogène sensiblement pur ou tout au moins un mélange gazeux contenant de l'hydrogène, directement utilisable pour alimenter une pile à combustible du type PEM, opérant à basse température.

Selon l'invention, un générateur d'hydrogène sensiblement pur comprend tous les éléments décrits dans le libéllé de la revendication indépendante 1.

D'autres caractéristiques optionelles sont définies dans les revendications dépendantes 2 à 15.

Selon une caractéristique particulière de l'invention, les moyens pour engendrer un plasma froid dans la chambre de réaction sont adaptés à y créer des décharges électriques périodiques brèves, à faible courant.

Dans cette définition d'un générateur d'hydrogène selon l'invention, le préambule précise que tout mélange gazeux primaire, formé par au moins un gaz combustible, par de la vapeur d'eau et/ou par de l'air ou de l'oxygène, est utilisable. En l'absence d'oxygène, on réalise une opération de vapo-réformage selon les équations (1), (2), (3). En l'absence de vapeur d'eau, on réalise une oxydation partielle du gaz combustible, selon l'équation (4). En présence d'oxygène et de vapeur d'eau, on peut ajuster les débits de gaz entrants pour avoir des réactions auto-thermiques.

Quant aux moyens de chauffage des gaz à réformer, ils seront placés à l'extérieur de la chambre de réaction (brûleurs) ou disposés à l'intérieur (oxydation partielle du gaz combustible) ou les deux à la fois, si cela est necessaire pour optimiser la consommation énergétique.

Pour ce qui concerne la caractéristique principale de l'invention, elle est constituée par une combinaison nouvelle de deux moyens, jamais réunis pour construire un générateur d'hydrogène sensiblement pur. Ces deux moyens sont un plasma froid et une membrane hautement sélective à l'égard de l'hydrogène.

Un plasma froid, engendré dans un milieu gazeux composite, comprend deux populations très différentes: l'une, très minoritaire, formée d'électrons à haute énergie et donc à très haute température (1 à $5.10^4$ K) et l'autre, beaucoup plus nombreuse, formée d'ions, d'atomes, de radicaux et de molécules, qui demeure à une température moyenne (500 à 1.000 K, dans le cas de l'invention), imposée par ailleurs. Une stimulation importante de la réactivité chimique des gaz concernés est alors produite, du fait de la seule présence de cette très petite population d'électrons à haute énergie uniformément produits et distribués dans tout le mélange gazeux concerné. Mais cette petite population très chaude ne modifie guère la température moyenne du mélange.

Cette propriété d'un plasma froid s'explique par le fait que dans un tel milieu, les collisions électroniques sont capables de créer des populations d'atomes et de molécules excités, d'ions moléculaires et de radicaux chimiquement très actifs, que l'on ne rencontre normalement pas dans un gaz neutre. Dans toutes les installations industrielles de production d'hydrogène, opérationnelles à ce jour, le déclenchement et la poursuite de diverses réactions chimiques dans le mélange neutre initial (stable a priori), utilisent un matériau catalyseur approprié. Dans un gaz ionisé par un plasma froid, ces mêmes réactions sont déclenchées et/ou accélérées par la seule présence des espèces particulièrement actives, engendrées par ce plasma. De telles réactions peuvent en conséquence être observées en l'absence de tout matériau catalyseur, un plasma froid constituant un milieu réactionnel particulier, remplaçant ce matériau et jouant, en mieux et à plusieurs titres, les mêmes rôles que lui.

Un des moyens pour engendrer un tel plasma froid consiste à produire entre deux électrodes, soumises à une différence de potentiel élevée et traversées par un courant faible, des décharges électriques, notamment du type couronne, et non pas des arcs électriques. On sait que des arcs électriques apparaissent entre deux électrodes plongées dans un gaz, lorsque la tension qui leur est appliquée a, pendant un court instant déterminé, dépassé un certain seuil (20 KV, par exemple), fixé par les conditions de l'opération. Lorsque l'arc est établi, la tension entre les électrodes est faible et le courant très élevé.

En revanche, les décharges électriques couronnes, qui engendrent le plasma froid utilisé dans le cadre de l'invention, demeurent dans leur état propre et ne sont pas les phases initiales de production des arcs électriques périodiques décrits par PME. Ces décharges électriques couronnes sont engendrées par des tensions électriques périodiques brèves, ayant soit une amplitude inférieure au seuil d'amorçage d'un arc soit supérieure à ce seuil mais dans ce cas, la haute tension appliquée sera toujours de durée insuffisante pour pouvoir amorcer un tel arc.

L'apport d'énergie électrique, fournie aux gaz concernés pour engendrer un tel plasma froid, est très faible (environ 10%) par rapport à l'énergie thermique totale qui doit être fournie à ces gaz pour réaliser le réformage envisagé.

Quant à la membrane hautement sélective à l'égard de l'hydrogène, sa disposition en cloison mitoyenne, entre la chambre de réaction et la chambre de collecte de l'hydrogène, permet une extraction immédiate de l'hydrogène naissant. Cela a pour effet de permettre d'effectuer un réformage quasiment complet du mélange concerné.

Grâce à ces dispositions, on réalise, avec des moyens relativement peu encombrants, peu onéreux et peu consommateurs d'électricité, un réformage particulièrement efficace du mélange primaire concerné et l'on peut produire de l'hydrogène sensiblement pur, utilisable pour une alimentation directe d'une pile à combustible.

Les caractéristiques et avantages de l'invention ressortiront d'une manière plus précise de la description ci-après de formes de réalisation de l'invention, données à titre d'exemples non limitatifs, en référence aux dessins annexés dans lesquels:

- la figure 1 représente la coupe schématique longitudinale d'un générateur d'hydrogène comportant une chambre de réaction à plasma froid, produit par des micro-ondes, une membrane perméable à l'hydrogène entourant cette chambre;
- la figure 2 représente la coupe schématique longitudinale d'un générateur d'hydrogène comportant une chambre de réaction à plasma froid, produit par des décharges couronnes pulsées, une membrane perméable à l'hydrogène entourant cette chambre;
- la figure 3 représente la coupe schématique d'un générateur d'hydrogène comportant une chambre de réaction à plasma froid, produit entre des électrodes par des décharges couronnes pulsées, une membrane perméable à l'hydrogène étant disposée dans cette chambre;
- les figures 4 et 5 représentent des coupes schématiques de générateurs d'hydrogène comportant des chambres de réaction à plasmas froids, respectivement engendrés par des micro-ondes et par des décharges couronnes pulsées, et des moyens de traiter le mélange secondaire résultant, comprenant des milieux catalyseurs particuliers, respectivement adaptés à compléter la conversion recherchée et à oxyder le monoxyde de carbone produit.

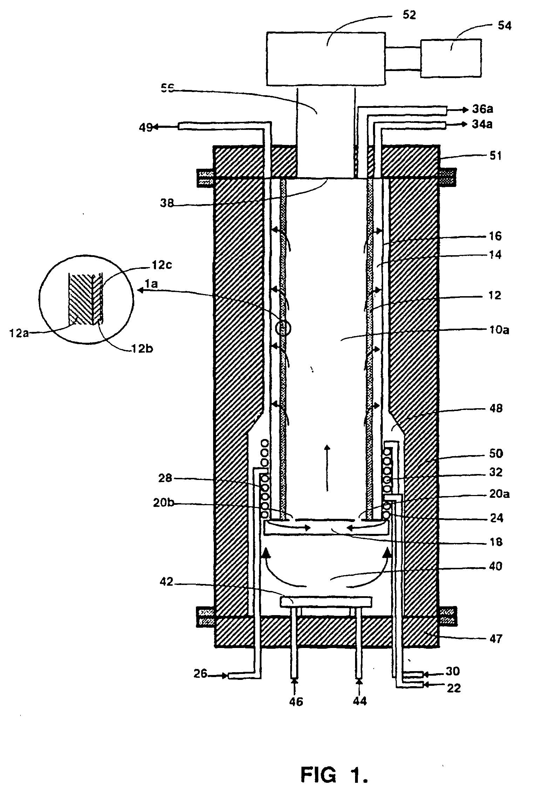

Selon la figure 1, une chambre cylindrique de réaction 10a, est entourée par une membrane 12, présentant une perméabilité sélective pour l'hydrogène. Dans la loupe la, est représentée une coupe partielle d'une forme de réalisation particulière de cette membrane 12. Elle comprend un support extérieur relativement épais 12a, en céramique poreuse (alumine, par exemple) de 2 mm d'épaisseur, un revêtement mince 12b, généralement de 20 à 100 microns d'épaisseur, réalisé en l'un des métaux connus pour leur perméabilité sélective à l'hydrogène et notamment: vanadium, niobium, palladium, palladium-argent ou même silicium et une couche intérieure 12c, monoatomique et non-métallique, du carbone ou du soufre, par exemple. Ce type de membrane super-perméable a été décrite par A.I. Livshits dans un article publié dans "Journal of Nuclear Materials 170", de 1990 (pages 79-92) par les Editions North-Holland. Dans une autre forme de réalisation de la membrane 12, celle-ci ne comporte pas de couche monoatomique non-métallique 12c. Dans ce cas, le revêtement métallique 12b du support 12a est de préférence ultra-mince, c'est-à-dire d'une épaisseur inférieure à 20 microns. La membrane 12 est entourée par une chambre cylindrique annulaire 14 de collecte de l'hydrogène, extérieurement délimitée par une paroi métallique 16, étanche à l'hydrogène.

Au pied de la chambre de réaction 10a, est installée une pièce d'entrée 18, réalisant trois fonctions: mélanger, surchauffer et injecter les gaz réactifs concernés. Cette injection est faite en écoulement tourbillonnaire, au moyen de tuyères (non représentées) convenablement orientées à cet effet, montées sur des ouvertures 20 a,b, pratiquées dans le plafond de la pièce 18. Le mélangeur 18 est relié (1) à un conduit 22 d'alimentation en combustible (alcool ou hydrocarbure) à travers un échangeur thermique en spirale 24, (2) à un conduit 26 d'alimentation en vapeur d'eau, à travers un échangeur surchauffeur 28, du même genre, et (3) un conduit 30 d'alimentation en oxygène (ou en air) à travers un autre échangeur thermique semblable 32.

Sous la pièce d'entrée 18 de la chambre de réaction 10a, est disposée une chambre de combustion 40, au pied de laquelle est installé un brûleur 42, alimenté en mélange gazeux combustible par un conduit 44 et en air, par un conduit 46. Les gaz brûlés dans la chambre 40 sont évacués par une cheminée annulaire 48, qui débouche à l'extérieur par un tuyau d'échappement 49, et qui entoure la chambre de collecte d'hydrogène 14 ainsi que les échangeurs thermiques 24, 28 et 32. La chambre de combustion 40 et la cheminée annulaire 48 sont entourées par une gaine relativement épaisse, thermiquement isolante 50, en laine de silice par exemple, possédant un fond 47 et un couvercle 51. Un conduit 34a assure l'évacuation de l'hydrogène présent dans la chambre de collecte d'hydrogène 14. Un conduit 36a assure l'évacuation du mélange secondaire résiduel présent dans la chambre de réaction 10a. Le haut de la chambre de réaction 10a est obturé par une fenêtre 38 perméable aux micro-ondes.

Pour engendrer un plasma froid dans la chambre de réaction 10a, un générateur de micro-ondes 52 (un magnétron opérant par exemple à trois Gigahertz), alimenté par une source 54 délivrant des impulsions de vingt à trente kilovolts, avec une fréquence de un à dix kilohertz et une durée de quelques microsecondes, est relié par un guide d'ondes 56 à la fenêtre 38 de la chambre 10a. Cette chambre 10a constitue une cavité résonnante pour les micro-ondes qui lui sont appliquées et, de ce fait, elle possède une dimension longitudinale égale à un nombre entier de demi-longueurs d'onde de ces micro-ondes. De la sorte sont créées dans le mélange gazeux concerné, des décharges électriques micro-ondes, semblables à des décharges électriques couronnes. Pour en améliorer l'efficacité, on pourra installer, dans la chambre de réaction, des pointes métalliques, isolées les unes des autres.

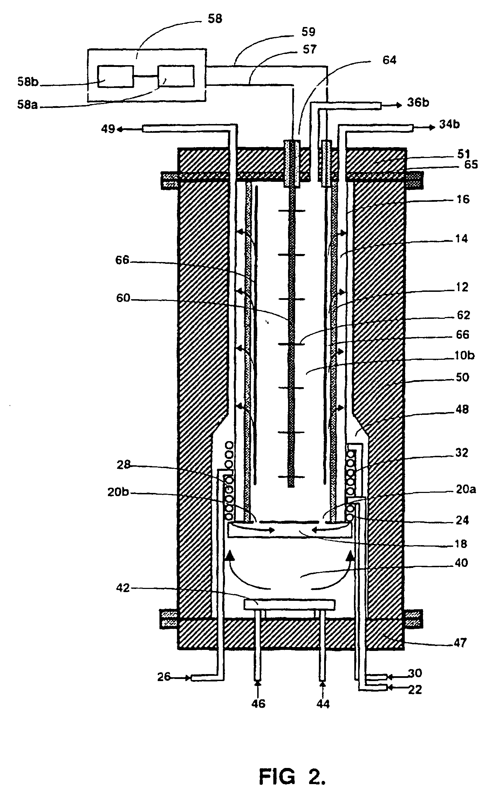

Selon la figure 2, la chambre de réaction 10b représentée diffère de celle 10a de la figure 1, par les moyens d'y engendrer un plasma froid. Ces moyens comprennent une source 58 délivrant une haute tension alternative pulsée et des électrodes 62-66, respectivement reliées à la borne haute tension de cette source et à sa masse. Cette source 58 comporte un générateur HF 58a, produisant une haute fréquence modulée par un circuit BF adéquat 58b. A titre d'exemple, la source 58 délivre ainsi une haute tension alternative de 10 à 20 KV d'amplitude, avec une fréquence d'environ 1 MHz, modulée par des signaux carrés ayant une fréquence d'environ 1 KHz et des durées de quelques microsecondes. L'amplitude des tensions alternatives HF appliquées sera, en général, un peu supérieure au seuil d'amorçage d'un arc, la durée des impulsions effectivement concernées (une demie période HF de l'un et l'autre sens) étant bien évidemment toujours trop faible, pour pouvoir provoquer un tel amorçage d'arc. Le nombre de périodes HF compris dans une impulsion de modulation ainsi que la valeur exacte de la fréquence HF seront déterminés en fonction des conditions particulières de l'opération. La fréquence et/ou la durée de ces impulsions de modulation seront ajustées en fonction de la puissance électrique moyenne à fournir au gaz pour engendrer le plasma froid recherché.

La borne de sortie haute tension de la source 58 est reliée, par un premier conducteur 57 à fort isolement, à une tige métallique rigide 60, disposée au centre de la chambre de réaction 10b. Cette tige 60 porte des électrodes radiales 62, en forme de pointes. Celles-ci sont relativement nombreuses et sont régulièrement disposées le long de la tige 60, leur nombre total et l'écartement optimal de leurs niveaux, étant déterminés à la suite d'essais systématiques. Cette tige 60 est rigidement fixée à un passage étanche 64, à fort isolement électrique, installé dans une flasque 65 de fermeture de la chambre de réaction 10b. Un second conducteur 59, connecté à la masse de la source 58, est relié à une grille métallique fine 66, de forme cylindrique à section circulaire. Cette grille 66 est installée dans la chambre de réaction 10b, au proche voisinage de la face interne de la membrane 12. De la sorte, des décharges électriques couronnes apparaissent entre les électrodes en pointes 62 et la grille 66.

Cette grille 66, proche de la membrane 12 d'extraction d'hydrogène, est au potentiel de masse et non au potentiel haut de la source 58. Cela, pour éviter que des décharges électriques puissent, dans le cas contraire, se produire entre cette grille 66 et la membrane 12, nécessairement à la masse de tout l'appareil. Ce qui détériorerait les couches métalliques minces que cette membrane 12, qui entoure la chambre de réaction, comporte généralement à l'intérieur. Quant à la tige 60 qui supporte les électrodes en pointes 62, alimentées par la très haute tension alternative de la source 58, on notera que, du fait du passage très isolant 64 de cette tige 60 à travers la flasque 65 et de l'éloignement relatif des électrodes 62 des autres éléments de l'appareil, aucune capacité électrique parasite notable entre ces électrodes 62 et la masse de ces éléments, n'intervient en parallèle sur la haute impédance établie entre ces électrodes 62 et la grille 66, avant et pendant les décharges électriques à produire. Ce qui permet d'obtenir une production non perturbée de ces décharges.

Grâce à la tension alternative à haute fréquence, délivrée par la source 58, on pourra associer à l'une des électrodes 62-66, une couche de matériau isolant à haute constante diélectrique. S'il en est besoin, cette couche sera poreuse. De la sorte, seront créées des décharges électriques barrières, particulièrement efficaces pour engendrer un plasma froid.

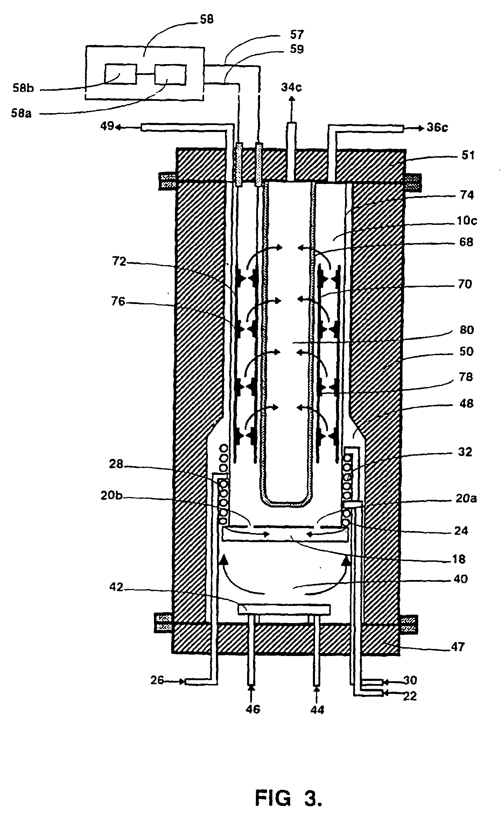

Selon la figure 3, la chambre de réaction 10c diffère principalement de celle 10b de la figure 2, par le fait qu'une membrane 68, en forme de doigt de gant, sélectivement perméable à l'hydrogène, est disposée au centre de la chambre de réaction 10c. La paroi de la membrane 68 est identique à la paroi de l'une ou l'autre des deux formes de réalisation des membranes 12 décrites plus haut. Dans la chambre de réaction 10c, sont disposées des grilles métalliques 70-72, notamment de formes cylindriques, respectivement reliées aux conducteurs 57-59 de branchement de la source de tension 58, la haute tension alternative pulsée étant ainsi appliquée à la grille 72 et la masse, à la grille 70, laquelle entoure la membrane 68. La paroi extérieure 74 de la chambre 10c est isolante, imperméable à l'hydrogène et adaptée à tenir la pression relativement élevée de la chambre de réaction 10c. La grille 72 est disposée au proche voisinage de la paroi 74 sans risque de provoquer des décharges électriques parasites. Au moins l'une de ces grilles est équipée d'électrodes radiales 76-78. L'intérieur de la membrane 68 est une chambre 80 de collecte de l'hydrogène qui possède un conduit axial d'évacuation 34c. La chambre 10c possède un conduit 36c d'évacuation du mélange secondaire résiduel.

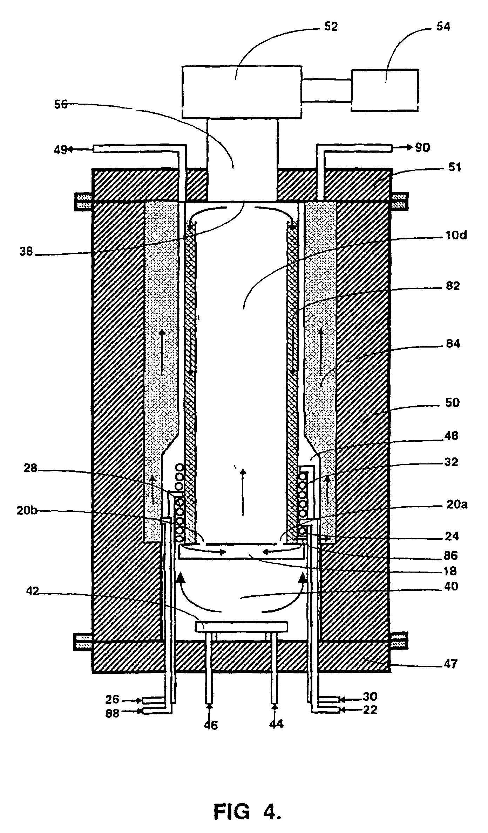

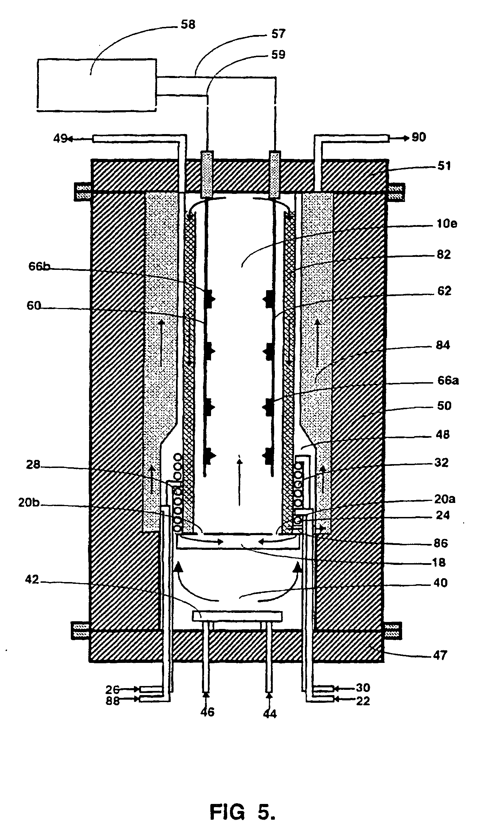

Selon les figures 4 et 5, sont représentées deux autres formes de réalisation de l'invention, qui ne comportent pas de membrane d'extraction de l'hydrogène naissant produit dans les chambres de réaction. Dans les deux cas, la membrane est remplacée par deux espaces annulaires 82-84, coaxiaux des chambres de réaction 10 d,e. Dans ces espaces, sont effectués des traitements complémentaires du mélange secondaire produit dans ces chambres par le réformage du mélange primaire, réalisé selon les équations (1) à (4). L'espace annulaire 82 entoure chaque chambre de réaction 10 d,e, l'amont de cet espace étant en communication avec l'aval de cette chambre. Cet espace 82 est rempli de granulés enrobés de nickel, un matériau catalyseur de la conversion du méthane en hydrogène. L'espace annulaire 84 entoure la cheminée 48 annulaire de la chambre de combustion 40. La base de l'espace 84 est en communication, d'une part, avec l'aval de l'espace 82 à travers un conduit 86 et, d'autre part, avec une source d'oxygène par le moyen d'un conduit 88. L'espace annulaire 84 est rempli de granulés enrobés de platine, un matériau catalyseur de l'oxydation du monoxyde de carbone. Un conduit 90 d'évacuation du mélange secondaire traité est relié au sommet de l'espace annulaire 84.

En référence aux figures 1, 2 et 3, le brûleur 42 est alimenté en 44 par un mélange gazeux combustible qui pourra comprendre le mélange gazeux secondaire résiduel, récupéré sur l'un des conduits d'échappement 36 a,b,c et un complément de combustible, identique ou non à celui qui alimente en 22 les chambres de réaction 10 a,b,c. Les

**EP 0 952 957 B1**

trois échangeurs thermiques 24-28-32, installés à la base de la cheminée annulaire 48 de la chambre de combustion 40, qui sont traversés par les trois composants du mélange primaire à réformer (à savoir le gaz combustible, la vapeur d'eau et l'oxygène (ou l'air), amenés par les conduits 22-26-30), préchauffent chacun de ces composants avant de les introduire dans la pièce d'entrée 18 de la chambre de réaction 10 a,b,c.

uans cette pièce d'entrée 18, ces trois composants subissent un mixage complet et un chauffage intense sous l'action de la flamme du brûleur 40. La température du mélange primaire qui doit être obtenue est d'environ 500°C dans le cas où le combustible est du méthane et de 250 à 300°C, pour du méthanol. Chaque combustible (y compris le méthane mélangé au monoxyde de carbone, produits ensemble par un appareil de gazéification d'un combustible lourd, liquide ou solide) possède en effet une température caractéristique de sa conversion en hydrogène. En conséquence, l'intensité de la flamme du brûleur 42 est une fonction de la nature du gaz combustible à réformer. Les tuyères d'injection, montées sur les ouvertures 20 a,b du plafond de la pièce d'entrée 18, introduisent, en écoulement tourbillonnaire, le mélange primaire surchauffé ainsi réalisé, dans la chambre de réaction 10 a,b,c concernée. Un échange thermique efficace est ensuite établi entre la totalité de ce mélange primaire et la paroi externe de la chambre de réaction 10 a,b,c concernée avec laquelle ce mélange est en contact. Cette paroi externe de la chambre 10 a,b,c est directement (cas de la fig.3) ou indirectement (cas des fig.1-2) chauffée par les gaz brûlés, circulant dans la cheminée annulaire 48 de la chambre de combustion 40. Grâce à la gaine 50 à fort isolement thermique, la chaleur transportée par les gaz brûlés circulant dans la cheminée annulaire 48 subit une déperdition minimale au profit de la chambre à plasma froid et de la chambre de collecte de l'hydrogène.

Sous l'action des décharges électriques produites dans la chambre de réaction par des micro-ondes pulsées (en 10a) ou par des électrodes 62-66, ou 76-78, alimentées par des hautes tensions alternatives pulsées (en 10 b,c), un plasma froid est créé dans tout le mélange gazeux primaire présent dans ces chambres. La présence de ce plasma froid a pour effet de provoquer, les conversions chimiques décrites par les équations (1) à (4) visées ci-dessus. Dans le cas du méthane, la température dans la chambre de réaction à plasma froid est alors régulée à 500°C. Il en résulte la production d'un mélange gazeux secondaire tel que défini plus haut. La membrane 12 (fig.1-2) ou 68 (fig.3), à. perméabilité sélective pour l'hydrogène, extrait l'hydrogène naissant au fur et à mesure qu'il est produit dans le mélange secondaire et le transfère dans la chambre de collecte d'hydrogène 14 ou 80. Cette intervention de la membrane sélective 12 ou 68 a pour effet complémentaire de déplacer positivement le point d'équilibre thermodynamique de la réaction, ainsi que cela a été dit plus haut. Par ailleurs, la pression dans cette chambre doit être suffisamment élevée pour pouvoir directement alimenter une pile à combustible.

Dans l'état actuel des membranes sélectivement perméables à l'hydrogène, disponibles sur le marché, la capacité maximale de production d'hydrogène d'une chambre de réaction à plasma froid est notablement supérieure à la capacité d'extraction de toute membrane connue. En conséquence, il est indispensable, pour pouvoir profiter au mieux des possibilités de conversion du méthane en hydrogène des chambres à plasma froid, d'augmenter au mieux la capacité d'extraction d'hydrogène des membranes concernées, notamment en augmentant la surface de ces membranes.

L'intérêt d'un générateur d'hydrogène sensiblement pur selon l'invention apparaît donc d'une manière évidente. En effet, un tel générateur présente par rapport aux appareils ayant la même fonction actuellement utilisés dans l'industrie: (1) un encombrement et un poids très inférieurs, (2) des températures de fonctionnement notablement plus faibles, (3) une intensité de chauffage réduite en conséquence, (4) une maintenance réduite au minimum, (5) un coût global relativement faible et (6) la possibilité d'être aisément installé sur des voitures électriques de série ou sur des groupes électrogènes de petite et moyenne puissances, aisément déplaçables.

Dans le cas où l'on voudrait utiliser du gazole, du charbon ou du bois pour alimenter une centrale électrique fixe, relativement puissante et à haut rendement énergétique, comprenant un générateur d'hydrogène sensiblement pur selon l'invention et une pile à combustible, on devra faire appel à une unité de gazéification relativement encombrante.

En référence aux figures 4 et 5, des réacteurs à matériaux catalyseurs, complémentaires de la chambre de réaction à plasma froid, sont utilisés pour traiter le mélange secondaire produit et le rendre directement utilisable dans certains types de piles à combustible, ceux d'un type autre que PEM, opérant à des températures relativement élevées. Le réacteur annulaire 82, contenant des granulés enrobés de nickel, a pour fonction de compléter la conversion de méthane en hydrogène effectuée dans les chambres à plasma froid 10 d,e. Le réacteur annulaire 84, qui contient des granulés enrobés de platine et reçoit de l'oxygène, a pour fonction d'oxyder le monoxyde de carbone contenu dans le mélange secondaire qui le traverse et de le transformer ainsi en dioxyde de carbone. Les deux générateurs d'hydrogène selon les figures 4-5, sont des appareils, perfectionnés selon l'invention, qui présentent des avantages par rapport aux appareils connus ayant la même fonction. Ils sont notamment moins encombrants et moins chers. Ils conviennent pour des installations fixes ou relativement peu transportables de moyenne puissance.

L'invention n'est pas limitée aux formes de réalisation et aux applications décrites.

Il est évident que les générateurs d'hydrogène sensiblement pur, selon l'invention, ne sont pas uniquement destinés à alimenter des piles à combustible. De tels générateurs sont en effet particulièrement bien adaptés à équiper les laboratoires de chimie des entreprises et des universités. Pour cela, ils seront, de préférence, alimentés par le gaz naturel fourni par le réseau.

Plusieurs membranes 68, sélectivement perméables à l'hydrogène, réalisées en forme de doigts de gant, pourront être installées dans une même chambre de réaction à plasma froid. Dans ce cas, le plasma sera engendré entre deux groupes d'électrodes, isolés l'un de l'autre, respectivement reliés à la haute tension d'alimentation et à la masse. Ces deux groupes d'électrodes seront de préférence semblables à celles décrites plus haut, notamment des grilles métalliques et des tiges métalliques portant des pointes. Ils seront installés dans la chambre de réaction, en fonction de la disposition adoptée pour les membranes. De la sorte, pour un volume donné de la chambre de réaction, la surface des membranes et donc la capacité totale d'extraction de l'hydrogène seront augmentées. Les chambres de collecte d'hydrogène de ces membranes seront reliées à un conduit d'évacuation unique, extérieur à la chambre de réaction.

Quant au support poreux 12a des membranes 12 et 68, sélectivement perméables à l'hydrogène, il pourra ne pas être une céramique. En effet, tout solide réfractaire poreux pourra convenir pour un tel support.

Pour ce qui concerne les deux étapes caractéristiques du procédé selon l'invention de production d'un courant gazeux, contenant de l'hydrogène soit seul soit mélangé à du dioxyde de carbone, pour pouvoir directement alimenter une pile à combustible opérant à basse température, on notera qu'elles peuvent ne pas être mises en oeuvre dans un même appareil. Dans ce cas, le traitement adéquat du mélange gazeux secondaire produit par le premier appareil sera réalisé dans un second, disposé au voisinage du premier.

**Revendications**

1. Générateur d'hydrogène sensiblement pur comportant :

   - une chambre de réaction (10 a,b,c), dans laquelle est injecté un mélange gazeux primaire, formé par au moins un gaz combustible, tel qu'un hydrocarbure, un alcool ou du monoxyde de carbone, ainsi que par de la vapeur d'eau et/ou de l'oxygène et/ou de l'air ;

   <u>**caractérisé en ce qu'**il comprend en outre :</u>

   - des moyens de chauffage (18-40) étant associés à la chambre de réaction afin d'y établir et d'y maintenir une température moyenne prédéterminée;

   - des moyens (52-56 ou 58-62-66) pour produire dans la chambre de réaction (10 a,b,c') des décharges électriques à courant notablement plus faible que celui des arcs électriques, de manière à y engendrer un plasma froid adapté à stimuler la réactivité chimique du mélange gazeux primaire sans provoquer une augmentation sensible de la température moyenne de ces mêmes gaz, en vue de réaliser le réformage du mélange gazeux primaire produisant un mélange gazeux secondaire comprenant de l'hydrogène, du dioxyde de carbone et, généralement, du monoxyde de carbone et d'un résidu du mélange gazeux primaire ; et

   - des moyens d'extraction (12-68, 82-84) de l'hydrogène du mélange gazeux secondaire.

2. Générateur d'hydrogène selon la revendication 1, **caractérisé en ce que** les moyens d'extraction de l'hydrogène du mélange gazeux secondaire comprennent une membrane présentant une haute perméabilité sélective à l'égard de l'hydrogène, disposée en cloison mitoyenne entre la chambre de réaction (10 a,b,c) et une chambre (14, 80) de collecte de l'hydrogène produit.

3. Générateur d'hydrogène selon la revendication 1 ou 2, **caractérisé en ce que** les moyens de chauffage (18-40) comprennent un brûleur (42) qui est alimenté par un mélange gazeux comprenant le dit gaz combustible.

4. Générateur d'hydrogène selon la revendication 1, **caractérisé en ce que** les moyens pour produire dans la chambre de réaction (10 b,c) des décharges électriques à faible courant comprennent :

   - deux électrodes (62-66 ou 76-78) isolées l'une de l'autre, disposées dans la chambre de réaction (10 b,c), et respectivement reliées par des conducteurs (57-59) aux bornes de haute tension et de masse d'une source haute tension (58) délivrant de brèves impulsions périodiques ayant une amplitude soit inférieure au seuil d'amorçage d'un arc, soit supérieure à ce seuil mais d'une durée insuffisante pour amorcer un tel arc ;

- l'électrode (62 ou 76) à laquelle est appliquée cette haute tension est fortement isolée de la masse générale de l'appareil.

5. Générateur d'hydrogène selon la revendication 4, **caractérisé en ce que** la source (58) comprend :

- un circuit HF (58a) produisant une tension alternative à haute fréquence, de l'ordre du mégahertz, ayant une amplitude maximale de plusieurs kilovolts;
- un circuit BF (58b) produisant des impulsions brèves, ayant une fréquence de l'ordre du kilohertz et une durée de quelques microsecondes, appliquées en modulation au circuit HF (58a).

6. Générateur d'hydrogène selon la revendication 1, **caractérisé en ce que** les moyens pour produire dans la chambre de réaction (10 a) des décharges électriques à faible courant comprennent :

- un générateur de micro-ondes (52) alimenté par une source haute tension (54) modulée par des impulsions périodiques brèves, ayant une fréquence de l'ordre du kilohertz et une durée de quelques microsecondes;
- la dimension longitudinale de la chambre de réaction (10 a) est un nombre entier de demi-longueurs d'onde des micro-ondes produites.

7. Générateur d'hydrogène sensiblement pur selon la revendication 2, **caractérisé en ce que** la membrane (12-68) présentant une haute perméabilité sélective à l'égard de l'hydrogène, comprend :

- un support creux (12a) possédant une paroi relativement épaisse, réalisée en un solide réfractaire poreux;
- un revêtement ultra-mince (12b) réalisé en un métal perméable à l'hydrogène, déposé sur la face du support (12a) constituant une paroi de la chambre de réaction (10 a,b,c).

8. Générateur d'hydrogène ultra pur selon la revendication 2 , caratiérisé en ce que la membrane (12-68) présentant une haute perméabilité sélective à l'égard de l'hydrogène, comprend :

- un support creux (12a) possédant une paroi relativement épaisse, réalisée en un solide réfractaire poreux;
- un revêtement mince (12b) réalisé en un métal perméable à l'hydrogène, déposé sur la face du support (12a) servant de paroi à la chambre de réaction (10 a,b,c);
- ledit revêtement étant pourvu à l'extérieur d'une couche monoatomique non métallique (12c), tel que du souffre ou carbone, de façon que la membrane (12) puisse se comporter en membrane super-perméable pour l'hydrogène atomique naissant produit au cours du réformage.

9. Générateur d'hydrogène selon la revendication 4, **caractérisé en ce que** :

- les moyens d'extraction de l'hydrogène du mélange gazeux secondaire comprennent une membrane présentant une haute perméabilité sélective à l'égard de l'hydrogène, disposée en cloison mitoyenne entre la chambre de réaction (10 a,b,c) et une chambre (14, 80) de collecte de l'hydrogène produit.
- la membrane (12), sélectivement perméable à l'hydrogène, entoure la chambre de réaction (10b) et constitue sa paroi extérieure;
- une tige métallique rigide (60) solidement montée sur un passage étanche (64) à fort isolement électrique, disposée au centre de la chambre de réaction (10b), porte un grand nombre d'électrodes radiales (62) et est relié à la haute tension délivrée par la source (58);
- une grille métallique (66) disposée au proche voisinage de la membrane (12) est reliée à la masse de la source (58).

10. Générateur d'hydrogène selon la revendication 4, **caractérisé en ce que** :

- les moyens d'extraction de l'hydrogène du mélange gazeux secondaire comprennent une membrane présentant une haute perméabilité sélective à l'égard de l'hydrogène, disposée en cloison mitoyenne entre la chambre de réaction (10 a,b,c) et une chambre (14, 80) de collecte de l'hydrogène produit
- la chambre de réaction (10c) entoure la membrane (68) sélectivement perméable à l'hydrogène;
- la membrane (68) a une forme en doigt de gant et enferme une chambre de collecte de l'hydrogène (80);
- la paroi extérieure (74) de la chambre (10c) est électriquement isolante;
- une première électrode (72-76), reliée à la haute tension de la source d'alimentation (58), est disposée au proche voisinage de cette paroi (74);

- une seconde électrode (70-78), reliée à la masse de la source (58) est disposée au proche voisinage de la membrane (68).

11. Générateur d'hydrogène selon la revendication 10, **caractérisé en ce qu'**il comporte, dans une même chambre de réaction plusieurs membranes en forme de doigt de gant et plusieurs groupes d'électrodes associés, la disposition, la forme et le nombre de ces électrodes étant fonction de la disposition adoptée pour les membranes.

12. Générateur d'hydrogène sensiblement pur selon la revendication 1, **caractérisé en ce que** :

- la chambre de réaction (10 a,b,c) comporte à sa base, une pièce d'entrée (18) pourvue d'un fond et d'un plafond, adaptée à réaliser le mixage et le surchauffage des gaz devant composer le mélange primaire;
- ledit fond étant soumis à la flamme d'un brûleur (42) disposé dans une chambre de combustion (40);
- ledit plafond comportant des ouvertures (20 a,b) munies de tuyères adaptées à injecter en écoulement tourbillonnaire dans la chambre de réaction (10 a,b,c) le mélange gazeux primaire ainsi réalisé et surchauffé.

13. Générateur d'hydrogène selon la revendication 12, **caractérisé en ce que** :

- la chambre de combustion (40) comporte une cheminée annulaire (48) entourant la chambre de réaction (10 a,b,c);
- des échangeurs thermiques (24, 28, 32) respectivement alimentés par les composants du mélange gazeux primaire à réaliser, sont disposés au pied de cette cheminée (48) et débouchent dans la pièce d'entrée (18);
- une gaine d'isolement thermique (50) entoure la chambre de combustion (40) et la cheminée annulaire (48).

14. Générateur d'hydrogène à pureté relative selon la revendication 1, **caractérisé en ce que** les moyens d'extraction de l'hydrogène du mélange gazeux secondaire comprennent:

- deux chambres de réaction complémentaires (82-84) disposées en série autour et à la suite de la chambre de réaction (10 d,e), ces chambres complémentaires contenant des matériaux catalyseurs respectivement adaptés à parfaire ledit réformage, puis à éliminer le monoxyde de carbone dudit mélange gazeux secondaire, afin de produire un mélange gazeux final formé principalement d'hydrogène et de dioxydc de carbone.

15. Générateur d'hydrogène selon la revendication 14, **caractérisé en ce que** lesdites chambres complémentaires comprennent :

- un premier espace annulaire (82) relativement étroit, possédant une paroi commune avec la chambre de réaction (10 d,e);
- un second espace annulaire (84) entourant le premier (82) et séparé de lui par une cheminée annulaire (48) associée à la chambre de combustion (40);
- le premier espace (82) contient un premier matériau catalyseur adapté à compléter le réformage réalisé dans la chambre de réaction (10 d,e);
- le second espace (84) contient un second matériau catalyseur adapté à convertir du monoxyde de carbone en dioxyde de carbone;
- l'amont et l'aval du premier espace (82) communiquent respectivement avec l'aval de la chambre de réaction (10 d,e) et avec l'amont du second espace (84);
- l'amont et l'aval du second espace (84) sont respectivement reliés à un conduit (88) d'alimentation en oxygène ou en air et à un conduit (90) d'extraction du mélange gazeux final ainsi obtenu;
- une gaine de protection thermique (50) entoure ledit second espace (84).

16. Procédé de production d'un débit gazeux incluant notamment de l'hydrogène, destiné à alimenter une pile à combustible opérant à basse température, à partir d'un mélange gazeux primaire formé d'un gaz combustible et de vapeur d'eau et/ou d'oxygène et/ou d'air, **caractérisé en ce qu'**il comprend le chauffage par des moyens de chauffage du mélange gazeux primaire qui est amené dans une zone de réaction à une température moyenne prédéterminée, la production dans la zone de réaction d'un plasma froid engendré dans le mélange gazeux primaire par des décharges électriques à courant notablement plus faible que celui des arcs électriques, ce qui déclenche une réaction de réformage du mélange primaire et produit un mélange gazeux secondaire formé notamment d'hydrogène, de dioxyde de carbone et, généralement de monoxyde de carbone et d'un résidu mélange primaire, extraction de l'hydrogène du mélange gazeux secondaire.

**17.** Procédé de production d'un débit gazeux incluant notamment de l'hydrogène selon la revendication 16, **caractérisé en ce que** l'extraction de l'hydrogène est effectuée à l'aide d'une membrane présentant une perméabilité sélective élevée à l'égard de l'hydrogène.

**18.** Procédé de production d'un débit gazeux incluant notamment de l'hydrogène selon la revendication 16, **caractérisé en ce que** l'extraction de l'hydrogène est effectuée par oxydation du monoxyde de carbone présent dans le mélange secondaire obtenu, et récupération d'un mélange comprenant de l'hydrogène et du dioxyde de carbone.

**Patentansprüche**

**1.** Erzeuger von im wesentlichen reinem Wasserstoff, umfassend:

- eine Reaktionskammer (10 a,b,c), in welche eine primäre gasförmige Mischung, welche aus wenigstens einem brennbaren Gas, wie einem Kohlenwasserstoff, einem Alkohol oder Kohlenmonoxid, sowie durch Wasserdampf und/oder Sauerstoff und/oder Luft gebildet wird, injiziert wird;

**dadurch gekennzeichnet, dass** sie außerdem umfasst:

- Erwärmungsmittel (18-40), welche mit der Reaktionskammer kombiniert sind, um eine vorher festgelegte mittlere Temperatur darin zu erzeugen und darin zu halten;
- Mittel (52-56 oder 58-62-66), um in der Reaktionskammer (10 a,b,c) elektrische Entladungen von Strom, welcher insbesondere schwächer ist als jener der Lichtbögen, zu erzeugen derart, dass darin ein kaltes Plasma erzeugt wird, welches dazu angepasst ist, die chemische Reaktivität der primären gasförmigen Mischung zu stimulieren, ohne eine deutliche Erhöhung der mittleren Temperatur eben dieser Gase hervorzurufen, in Hinblick darauf, die Reformierung der primären gasförmigen Mischung unter Erzeugung einer sekundären gasförmigen Mischung, welche Wasserstoff, Kohlendioxid und im allgemeinen Kohlenmonoxid und einen Rest der primären gasförmigen Mischung umfasst, auszuführen; und
- Mittel zur Extraktion (12-68, 82-84) des Wasserstoffs aus der sekundären gasförmigen Mischung.

**2.** Wasserstofferzeuger nach Anspruch 1, **dadurch gekennzeichnet, dass** die Mittel zur Extraktion des Wasserstoffs aus der sekundären gasförmigen Mischung eine Membran umfassen, welche eine hohe selektive Permeabilität in Hinblick auf den Wasserstoff aufweist, welche als Zwischenwand zwischen der Reaktionskammer (10 a,b,c) und einer Kammer (14,80) zum Sammeln des erzeugten Wasserstoffs angeordnet ist.

**3.** Wasserstofferzeuger nach Anspruch 1 oder 2, **dadurch gekennzeichnet, dass** die Erwärmungsmittel (18-40) einen Brenner (42) umfassen, der mit einer gasförmigen Mischung, welche das brennbare Gas umfasst, versorgt wird.

**4.** Wasserstofferzeuger nach Anspruch 1, **dadurch gekennzeichnet, dass** die Mittel zur Erzeugung der elektrischen Entladungen von schwachem Strom in der Reaktionskammer (10 b,c) umfassen:

- zwei Elektroden (62-66 oder 76-78), welche voneinander isoliert sind, welche in der Reaktionskammer (10 b, c) angeordnet sind und durch Leiter (57-59) mit den Hochspannungs- bzw. Masseklemmen einer Hochspannungsquelle (58), welche kurze periodische Impulse mit einer Amplitude, die entweder unter dem Schwellenwert der Zündung eines Bogens oder über diesem Schwellenwert liegt, aber von einer unzureichenden Dauer ist, um einen solchen Bogen zu zünden, liefert, verbunden sind;
- die Elektrode (62 oder 76), auf welche diese hohe Spannung angewendet wird, gegenüber der allgemeinen Masse des Apparats stark isoliert ist.

**5.** Wasserstofferzeuger nach Anspruch 4, **dadurch gekennzeichnet, dass** die Quelle (58) umfasst:

- einen HF-Kreis (58a), welcher eine Wechselspannung mit hoher Frequenz in der Größenordnung von Megahertz mit einer maximalen Amplitude von mehreren Kilovolt erzeugt;
- einen BF-Kreis (Niedrigfrequenz-Kreis) (58b), welcher kurze Impulse mit einer Frequenz in der Größenordnung von Kilohertz und einer Dauer von einigen Mikrosekunden, welche zur Modulation des HF-Kreises (58a) angewendet werden, liefert.

**6.** Wasserstofferzeuger nach Anspruch 1, **dadurch gekennzeichnet, dass** die Mittel zur Erzeugung der elektrischen Entladungen von schwachem Strom in der Reaktionskammer (10a) umfassen:

- einen Mikrowellenerzeuger (52), welcher durch eine Hochspannungsquelle (54), welche durch kurze periodische Impulse mit einer Frequenz in der Größenordnung von Kilohertz und einer Dauer von einigen Mikrosekunden moduliert wird, versorgt wird;
- die Längsausdehnung der Reaktionskammer (10a) eine ganze Zahl der halben Wellenlängen der erzeugten Mikrowellen ist.

**7.** Erzeuger von im wesentlichen reinem Wasserstoff nach Anspruch 2, **dadurch gekennzeichnet, dass** die Membran (12-68), die eine hohe selektive Permeabilität in Hinblick auf den Wasserstoff aufweist, umfasst:

- einen hohlen Träger (12a), welcher eine relativ dicke Wand, welche aus einem feuerfesten porösen Feststoff hergestellt ist, aufweist;
- einen ultradünnen Überzug (12b), welcher aus einem für Wasserstoff durchlässigen Metall hergestellt ist, welcher auf der Fläche des Trägers (12a), welche eine Wand der Reaktionskammer (10 a,b,c) bildet, abgeschieden ist.

**8.** Erzeuger von ultrareinem Wasserstoff nach Anspruch 2, **dadurch gekennzeichnet, dass** die Membran (12-68), die eine hohe selektive Permeabilität in Hinblick auf den Wasserstoff aufweist, umfasst:

- einen hohlen Träger (12a), welcher eine relativ dicke Wand, welche aus einem feuerfesten porösen Feststoff hergestellt ist, aufweist;
- einen dünnen Überzug (12b), welcher aus einem für Wasserstoff durchlässigen Metall hergestellt ist, welcher auf der Fläche des Trägers (12a), welche als Wand der Reaktionskammer (10 a,b,c) dient, abgeschieden ist;
- wobei der Überzug auf der Außenseite mit einer monoatomaren nicht-metallischen Schicht (12c), wie Schwefel oder Kohlenstoff, versehen ist derart, dass die Membran (12) sich als superpermeable Membran für den atomaren naszierenden Wasserstoff, der während der Reformierung erzeugt wird, verhalten kann.

**9.** Wasserstofferzeuger nach Anspruch 4, **dadurch gekennzeichnet, dass**:

- die Mittel zur Extraktion des Wasserstoffs aus der sekundären gasförmigen Mischung eine Membran umfassen, welche eine hohe selektive Permeabilität in Hinblick auf den Wasserstoff aufweist, welche als Zwischenwand zwischen der Reaktionskammer (10 a,b,c) und einer Kammer (14,80) zum Sammeln des erzeugten Wasserstoffs angeordnet ist;
- die Membran (12), welche für den Wasserstoff selektiv permeabel ist, die Reaktionskammer (10b) umgibt und ihre Außenwand bildet;
- eine steife Metallstange (60), welche fest auf einem dichten Durchgang (64) mit starker elektrischer Isolierung montiert ist, welche im Zentrum der Reaktionskammer (10b) angeordnet ist, eine große Anzahl von radialen Elektroden (62) trägt und mit der durch die Quelle (58) gelieferten Hochspannung verbunden ist;
- ein Metallrost (66), welcher in enger Nähe der Membran (12) angeordnet ist, mit der Masse der Quelle (58) verbunden ist.

**10.** Wasserstofferzeuger nach Anspruch 4, **dadurch gekennzeichnet, dass**:

- die Mittel zur Extraktion des Wasserstoffs aus der sekundären gasförmigen Mischung eine Membran umfassen, welche eine hohe selektive Permeabilität in Hinblick auf den Wasserstoff aufweist, welche als Zwischenwand zwischen der Reaktionskammer (10 a,b,c) und einer Kammer (14,80) zum Sammeln des erzeugten Wasserstoffs angeordnet ist;
- die Reaktionskammer (10c) die für den Wasserstoff selektive permeable Membran (68) umgibt;
- die Membran (68) die Form eines Handschuhfingers hat und eine Kammer zum Sammeln des Wasserstoffs (80) einschließt;
- die äußere Wand (74) der Kammer (10c) elektrisch isolierend ist;
- eine erste Elektrode (72-76), die mit der Hochspannung der Spannungsquelle (58) verbunden ist, in enger Nähe dieser Wand (74) angeordnet ist;
- eine zweite Elektrode (70-78), die mit der Masse der Quelle (58) verbunden ist, in enger Nähe der Membran (68) angeordnet ist.

**11.** Wasserstofferzeuger nach Anspruch 10, **dadurch gekennzeichnet, dass** er in ein und derselben Reaktionskammer mehrere Membranen in Form eines Handschuhfingers und mehrere Gruppen von zugeordneten Elektroden aufweist, wobei die Anordnung, die Form und die Anzahl dieser Elektroden von der Anordnung, welche für die Membranen gewählt wird, abhängt.

**12.** Erzeuger von im wesentlichen reinem Wasserstoff nach Anspruch 1, **dadurch gekennzeichnet, dass**:

- die Reaktionskammer (10 a,b,c) an ihrer Grundfläche ein Einlassteil (18) umfasst, welches mit einem Boden und einer Decke versehen ist, welches dazu angepasst ist, das Mischen und die Überhitzung der Gase, welche die primäre Mischung bilden müssen, auszuführen;
- der Boden der Flamme eines Brenners (42), der in einer Brennkammer (40) angeordnet ist, ausgesetzt ist;
- die Decke Öffnungen (20 a,b) umfasst, welche mit Düsen ausgestattet sind, welche dazu angepasst sind, die so hergestellte und überhitzte primäre gasförmige Mischung in Form von wirbeligem Strömen in die Reaktionskammer (10 a,b,c) zu injizieren.

**13.** Wasserstofferzeuger nach Anspruch 12, **dadurch gekennzeichnet, dass**:

- die Brennkammer (40) einen ringförmigen Kamin (48), welcher die Reaktionskammer (10 a,b,c) umgibt, umfasst;
- Wärmetauscher (24, 28, 32), welche jeweils mit den Bestandteilen der herzustellenden primären gasförmigen Mischung versorgt werden, am Fuß dieses Kamins (48) angeordnet sind und in das Einlassteil (18) münden;
- ein thermischer Isoliermantel (50) die Brennkammer (40) und den ringförmigen Kamin (48) umgibt.

**14.** Erzeuger von Wasserstoff von relativer Reinheit nach Anspruch 1, **dadurch gekennzeichnet, dass** die Mittel zur Extraktion des Wasserstoffs aus der sekundären gasförmigen Mischung umfassen:

- zwei komplementäre Reaktionskammern (82-84), welche in Reihe um die Reaktionskammer (10 d,e) herum und in der Folge von dieser angeordnet sind, wobei diese komplementären Kammern jeweils Katalysatormaterialien enthalten, welche dazu angepasst sind, die Reformierung zu vervollkommnen, dann das Kohlenmonoxid aus der sekundären gasförmigen Mischung zu entfernen, um eine endgültige gasförmige Mischung, welche hauptsächlich aus Wasserstoff und Kohlendioxid gebildet wird, herzustellen.

**15.** Wasserstofferzeuger nach Anspruch 14, **dadurch gekennzeichnet, dass** die komplementären Kammern umfassen:

- einen ersten, relativ engen, ringförmigen Raum (82), welcher eine gemeinsame Wand mit der Reaktionskammer (10 d,e) aufweist;
- einen zweiten ringförmigen Raum (84), welcher den ersten (82) umgibt und von diesem durch einen ringförmigen Kamin (48), der der Brennkammer (40) zugeordnet ist, getrennt ist;
- der erste Raum (82) ein erstes Katalysatormaterial enthält, das dazu angepasst ist, die in der Reaktionskammer (10 d,e) ausgeführte Reformierung zu vervollständigen;
- der zweite Raum (84) ein zweites Katalysatormaterial enthält, das dazu angepasst ist, Kohlenmonoxid zu Kohlendioxid umzuwandeln;
- der stromaufwärts gelegene Teil und der stromabwärts gelegene Teil des ersten Raums (82) mit dem stromabwärts gelegenen Teil der Reaktionskammer (10 d,e) bzw. mit dem stromaufwärts gelegenen Teil des zweiten Raums (84) verbunden sind;
- der stromaufwärts gelegene Teil und der stromabwärts gelegene Teil des zweiten Raums (84) mit einer Versorgungsleitung (88) für Sauerstoff oder Luft bzw. mit einer Leitung (90) zum Abziehen der so erhaltenen endgültigen gasförmigen Mischung verbunden sind;
- ein thermischer Isoliermantel (50) den zweiten Raum (84) umgibt.

**16.** Verfahren zur Herstellung eines Gasstroms, welcher insbesondere Wasserstoff umfasst, welcher dazu bestimmt ist, eine bei niedriger Temperatur betriebene Brennstoffzelle zu speisen, ausgehend von einer primären gasförmigen Mischung, welche aus einem brennbaren Gas und Wasserdampf und/oder Sauerstoff und/oder Luft gebildet wird, **dadurch gekennzeichnet, dass** es das Erwärmen durch Erwärmungsmittel der primären gasförmigen Mischung, die in eine Reaktionszone mit einer vorher festgelegten mittleren Temperatur eingespeist wird, die Erzeugung in der Reaktionszone eines kalten Plasmas, das in der primären gasförmigen Mischung durch elektrische Entladungen von Strom, welcher insbesondere schwächer ist als jener der Lichtbögen, erzeugt wird, was eine Reformierungsreaktion der primären Mischung auslöst und eine sekundäre gasförmige Mischung, welche insbesondere aus Wasserstoff, Kohlendioxid und im allgemeinen Kohlenmonoxid und einem Rest der primären Mischung gebildet wird, erzeugt, und eine Extraktion des Wasserstoffs aus der sekundären gasförmigen Mischung umfasst.

17. Verfahren zur Herstellung eines Gasstroms, welcher insbesondere Wasserstoff umfasst, nach Anspruch 16, **dadurch gekennzeichnet, dass** die Extraktion des Wasserstoffs mit Hilfe einer Membran, welche eine hohe selektive Permeabilität in Hinblick auf den Wasserstoff aufweist, erfolgt.

18. Verfahren zur Herstellung eines Gasstroms, welcher insbesondere Wasserstoff umfasst, nach Anspruch 16, **dadurch gekennzeichnet, dass** die Extraktion des Wasserstoffs durch Oxidation des in der erhaltenen sekundären Mischung vorhandenen Kohlenmonoxids und Gewinnung einer Mischung, welche Wasserstoff und Kohlendioxid umfasst, erfolgt.

## Claims

1. Generator of substantially pure hydrogen, including:

   - a reaction chamber (10 a, b, c) into which is injected a primary gas mixture formed by at least one fuel gas, such as a hydrocarbon, an alcohol or carbon monoxide, and by steam and/or oxygen and/or air;

   **characterized in that** it further includes:

   - heating means (18-40) being associated with the reaction chamber in order to establish and to maintain therein a predetermined average temperature;
   - means (52-56 or 58-62-66) for producing in the reaction chamber (10 a, b, c) electrical discharges at a current significantly lower than that of electric arcs, so as to generate therein a cold plasma suitable for stimulating the chemical reactivity of the primary gas mixture without significantly increasing the average temperature of those gases, with a view to reform the primary gas mixture in order to produce a secondary gas mixture containing hydrogen, carbon dioxide and, generally, carbon monoxide and a residue of the primary gas mixture; and
   - means (12-68, 82-84) for removing the hydrogen from the secondary gas mixture.

2. Hydrogen generator according to Claim 1, **characterized in that** the means for removing the hydrogen from the secondary gas mixture comprise a membrane having a high hydrogen permselectivity placed as a separator partition between the reaction chamber (10 a, b, c) and a chamber (14, 80) for collecting the hydrogen produced.

3. Hydrogen generator according to Claim 1 or 2, **characterized in that** the heating means (18-40) comprise a burner (42) which is fed with a gas mixture comprising said fuel gas.

4. Hydrogen generator according to Claim 1, **characterized in that** the means for producing low-current electrical discharges in the reaction chamber (10 b, c) comprise:

   - two electrodes (62-66 or 76-78) isolated from each other, placed in the reaction chamber (10 b, c) and respectively connected by conductors (57-59) to the high-voltage and earth terminals of a high-voltage supply (58) delivering short periodic pulses having an amplitude that is either less than the arc-striking threshold or greater than this threshold but of insufficient duration to strike such an arc;
   - the electrode (62 or 76) to which this high voltage is applied is strongly isolated from the general earth of the equipment.

5. Hydrogen generator according to Claim 4, **characterized in that** the supply (58) comprises:

   - an HF circuit (58a) producing a high-frequency alternating voltage at a frequency of the order of 1 MHz and having a maximum amplitude of several kilovolts;
   - an LF circuit (58b) producing short pulses having a frequency in the order of 1 kHz and a duration of a few microseconds, there being applied as modulation to the HF circuit (58a).

6. Hydrogen generator according to Claim 1, **characterized in that** the means for producing low-current electrical discharges in the reaction chamber (10 a) comprise:

   - a microwave generator (52) fed by a high voltage supply (54) modulated by short periodic pulses having a frequency of the order of 1 kHz and a duration of a few microseconds;
   - the longitudinal dimension of the reaction chamber (10 a) is an integer number of half-wavelengths of the microwaves produced.

7. Generator of substantially pure hydrogen according to Claim 2, **characterized in that** the membrane (12-68) having a high hydrogen permselectivity comprises:

   - a hollow support (12a) having a relatively thick wall made of a porous refractory solid; and
   - an ultra-thin coating (12b) made of a hydrogen-permeable metal deposited on the face of the support (12a) constituting a wall of the reaction chamber (10 a, b, c).

8. Generator of ultra-pure hydrogen according to Claim 2, **characterized in that** the membrane (12-68) having a high hydrogen permselectivity comprises:

   - a hollow support (12a) having a relatively thick wall made of a porous refractory solid;
   - a thin coating (12b) made of a hydrogen-permeable metal deposited on the face of the support (12a) serving as a wall for the reaction chamber (10 a, b, c);
   - said coating being provided on the outside with a monoatomic non-metallic layer (12c) such as sulphur or carbon so that the membrane (12) can behave as a superpermeable membrane for the nascent atomic hydrogen produced during the reforming.

9. Hydrogen generator according to Claim 4, **characterized in that**:

   - the means for removing the hydrogen from the secondary gas mixture comprise a membrane having a high hydrogen permselectivity placed as a separator partition between the reaction chamber (10 a, b, c) and a chamber (14, 80) for collecting the hydrogen produced;
   - the hydrogen-permselective membrane (12) surrounds the reaction chamber (10b) and constitutes its outside wall;
   - a rigid metal rod (60), firmly mounted on a strongly electrically insulated sealed passage (64) and placed at the centre of the reaction chamber (10b), carries a large number of radial electrodes (62) and is connected to the high voltage delivered by the supply (58);
   - a metal grid (66) placed in the close vicinity of the membrane (12) is connected to the earth of the supply (58).

10. Hydrogen generator according to Claim 4, **characterized in that**:

    - the means for removing the hydrogen from the secondary gas mixture comprise a membrane having a high hydrogen permselectivity placed as a separator partition between the reaction chamber (10 a, b, c) and a chamber (14, 80) for collecting the hydrogen produced,
    - the reaction chamber (10c) surrounds the hydrogen-permselective membrane (68);
    - the membrane (68) is in the shape of a glove finger and encloses a hydrogen collecting chamber (80);
    - the outside wall (74) of the chamber (10c) is electrically insulating;
    - a first electrode (72-76) connected to the high voltage of the power supply (58) is placed in the close vicinity of this wall (74); and
    - a second electrode (70-78) connected to the earth of the supply (58) is placed in the close vicinity of the membrane (68).

11. Hydrogen generator according to Claim 10, **characterized in that** it includes, in the same reaction chamber, a plurality of membranes in the shape of a glove finger and a plurality of associated groups of electrodes, the disposition, shape and number of these electrodes depending on the disposition of the membranes adopted.

12. Generator of substantially pure hydrogen according to Claim 1, **characterized in that**:

    - the reaction chamber (10 a, b, c) has, at its base, an entry part (18) provided with a bottom and a top and designed to mix and heat the gases that have to make up the primary mixture;

- said bottom being exposed to the flame of a burner (42) placed in a combustion chamber (40);
- said top incorporating openings (20 a, b) fitted with nozzles designed to inject a turbulent flow of the gas mixture thus produced and heated into the reaction chamber (10 a, b, c).

**13.** Hydrogen generator according to Claim 12, **characterized in that**:

- the combustion chamber (40) includes an annular chimney (48) surrounding the reaction chamber (10 a, b, c);
- heat exchangers (24, 28, 32), fed with the respective components of the primary gas mixture to be produced, are placed at the base of this chimney (48) and open into the entry part (18);
- a thermally insulative jacket (50) surrounds the combustion chamber (40) and the annular chimney (48).

**14.** Generator of relatively pure hydrogen according to Claim 1, **characterized in that** the means for removing the hydrogen from the secondary gas mixture include:

- two complementary reaction chambers (82-84) placed in series around and after the reaction chamber (10 d, e), these complementary chambers containing respective catalysts designed to improve said reforming and then to eliminate the carbon monoxide from said secondary gas mixture in order to produce a final gas mixture formed principally from hydrogen and carbon dioxide.

**15.** Hydrogen generator according to Claim 14, **characterized in that** said complementary chambers comprise:

- a relatively narrow first annular space (82) sharing a wall with the reaction chamber (10 d, e) ;
- a second annular space (84) around the first one (82) and separated from it by an annular chimney (48) associated with the combustion chamber (40);
- the first space (82) contains a first catalyst designed to complete the reforming carried out in the reaction chamber (10 d, e);
- the second space (84) contains a second catalyst designed to convert carbon monoxide into carbon dioxide;
- the upstream and downstream sides of the first space (82) respectively communicate with the downstream side of the reaction chamber (10 d, e) and with the upstream side of the second space (84);
- the upstream and downstream sides of the second space (84) are respectively connected to an oxygen or air supply line (88) and to a line (90) for removing the final gas mixture obtained in this way;
- a thermal protection jacket (50) surrounds said second space (84).

**16.** Method for producing a flow of gas including in particular hydrogen for feeding a fuel cell operating at a low temperature from a primary gas mixture formed from a fuel gas and steam and/or oxygen and/or air, **characterized in that** it includes heating of the primary gas mixture by heating means, which gas is fed into a reaction zone at a predetermined average temperature, production in the reaction zone of a cold plasma generated in the primary gas mixture by electric discharges at a current significantly lower than that of electric arcs, which triggers a reaction of reforming the primary mixture and produces a secondary gas mixture formed in particular from hydrogen, carbon dioxide and, generally, carbon monoxide and a primary mixture from residue, and removal of the hydrogen from the secondary gas mixture.

**17.** Method for producing a flow of gas including, in particular, hydrogen according to Claim 16, **characterized in that** the hydrogen is removed by means of a membrane having a high hydrogen permselectivity.

**18.** Method for producing a flow of gas including, in particular, hydrogen according to Claim 16, **characterized in that** the hydrogen is removed by oxidizing the carbon monoxide present in the secondary mixture obtained and recovering a mixture comprising hydrogen and carbon dioxide.

FIG 1.

**FIG 2.**

FIG 3.

FIG 4.

FIG 5.